# EUROPEAN PATENT APPLICATION

(11) **EP 4 016 424 A1**
(43) Date of publication of application: **22.06.2022**
(21) Application number: 21158128.5
(22) Date of filing: 19.02.2021
(51) Int. Cl.: G06Q 20/02, G06Q 20/18, G06Q 20/38

(54) **PAYMENT PROCESSING SYSTEM AND METHOD THEREFOR**

(30) Priority: 18.12.2020 US 202063127596 P
(71) Applicant: Sita Information Networking Computing USA, Inc., Atlanta, GA 30339 (US)
(72) Inventor: RODRIGUEZ, SANDRO, Atlanta GA 30339 (US); MORRIS, JUDY, Atlanta GA 30339 (US); EULER, ERIC, Atlanta GA 30339 (US); WIMPELBERG, DANIEL, Atlanta GA 30339 (US); CHEN, CALVIN, Atlanta GA 30339 (US)
(74) Representative: Torrance, Bruce James

(57) **Abstract**

Payment processing system, workstation, terminal, or kiosk comprising a module (209) that receives a payment request that includes payment information comprising a merchant or transaction identifier. The module also receives encrypted payment data from a reader (210) that includes an account number encrypted according to a first key. The module then transmits the payment information and the encrypted payment data to a payment server (211). On receiving the payment information and the encrypted payment data, the payment server determines a payment service provider based on the merchant or transaction identifier and a location identifier and transmits the encrypted payment data and the determined payment service provider to a security module (215).

## Description

### FIELD OF THE INVENTION

This invention relates to a payment processing system, workstation, terminal, or kiosk and in particular a self-service kiosk. Further, this invention relates to a payment processing system, workstation, terminal or kiosk for use by multiple merchants, such as airlines, at an airport. More particularly, this invention relates to a payment processing system, workstation, terminal, or kiosk which is shared between a number of different merchants.

### BACKGROUND OF THE INVENTION

In a shared or common use environment, multiple merchants or airlines share common retail space, including payment or vending terminals, particularly self service payment terminals, workstations, mobile devices, kiosks, self-bag drops and other infrastructure.

Known payment kiosks use payment solutions which are based upon a single merchant, using a single payment solution that supports interaction with multiple acquirers, such as banks but not simultaneously.

Further, it is commonplace for each of the individual merchants to have an agreement with a different payment solution provider (PSP) and a different bank or acquirer and to have their own payment terminal that can only interface to their preferred payment solution provider or bank. This means that a single payment terminal is required to run multiple 3^{rd} party payment applications, so that each merchant can use their chosen payment solution provider when they use the terminal.

This presents a problem when the payment system installed in these types of areas needs to be certified to comply with the payment industry requirements for certified secure environments.

For example, a payment terminal used by multiple merchants which runs a number of 3^{rd} party payment applications cannot easily be recertified when a change occurs in one payment application.

This is because a change to one payment application can invoke re-certification requirements on the other payment applications. Therefore, maintenance of such a terminal becomes very difficult when a payment terminal is used by multiple merchants. In this case, the certification regime is onerous and complex. A similar problem arises when non-payment applications are deployed for use on the same terminal as used by a payment application.

One known solution to these problems is to provide a single payment aggregator which processes payments for all the merchants using the shared terminal.

However, a problem with such a solution arises when the aggregator accepts payments on behalf of the multiple merchants and settles distribution of payments to the merchants. In this case, the aggregator acts as a single merchant on behalf of the multiple merchants using the shared terminal. This solution does not preserve existing payment provider relationships that exist for the merchants. This approach also reduces choice and competition among payment service providers as the aggregator becomes a single, large, payment processor for the shared terminal. In addition, as the aggregator may be listed as the merchant of record, and the merchant has difficulty in processing refunds or chargebacks.

A further problem arises when a number of merchant applications run concurrently at a single terminal. Each terminal includes a payment processor, such as a reader for reading a PIN encoded in a chip embedded in a credit card which is inserted into a reader. If the transaction is deemed to be authentic, then the reader injects a key to the terminal, which allows the terminal to process the transaction. However, the key which the reader injects into the terminal is specific to the payment processor, and not the actual merchant. Therefore, when a number of merchant applications run concurrently at a single terminal, a separate payment processor is required for each merchant application run on the terminal.

Currently many Payment Terminals allow for storing of initial keys on the Payment Terminals but there is a set limit to how many slots the Payment Terminals can hold. Also, the storage and limitation of the number of keys can vary from Payment Terminal models to Payment Terminal manufacturer.

Granted European Patent EP 2,996,079 B1 in the name of Amadeus SAS discloses payment terminal sharing.

It describes using cryptographic segregation between different operators of a payment terminals by adding a key for each payment service provider, PSP. This limits the functionality of multiple merchants to the number of available key shots in a particular device and makes the solution more device centric instead of regional or location based. It uses an encryption module to encrypt merchant information downloaded to a terminal.

Thus, known payment systems tie a Payment Terminal to a single payment provider for a merchant. In the case of an Airport, both on workstations, mobile devices, self-bag drops and kiosks, due to shared workspaces, an alternative option for providing a payment system is needed as multiple merchants, such as airlines, often share use of a single Payment Terminal which in some examples is a Pin Entry Device.

### SUMMARY OF THE INVENTION

The invention aims to address these problems by providing a terminal or system which can be shared between multiple merchants by using a common payment processing architecture which connects to multiple payment providers for transaction processing.

Embodiments of the invention seek to provide secure payment transactions for airline or other customers at an airport or locations outside of an airport.

Embodiments of the invention also seek to address these problems by providing a payment system which allows for the usage of a single payment terminal for multiple different merchants while allowing multiple different payment providers to perform transaction processing.

Advantageously, embodiments of the invention:
- Provide a manner for airlines to be able to take secure payment transactions both contact and contactless at the airport;
- Provide a manner for airlines or other merchants to operate in a common use environment which means sharing the same Payment Terminal, infrastructure and cost. This means that the Payment Terminal and platform supporting the Payment Terminal work in pre-existing ways of processing data at an airport or at other locations;
- Provide a manner for airlines or other merchants to be able to process payment transactions with their own financial agreements set on the Payment Terminal that has been agreed by the airline or merchant and the payment service provider, PSP;
- Provide a manner for an airline or other merchants to take on payments and be able to route the transaction to a payment service provider of their choosing. This extends to a different payment provider in a different region or airport and other locations;
- Provided for a way to minimize the payment card industry, PCI, burden for airlines or other merchants during the payment transaction.
- Stores a single key for all merchants or airlines. The single key may be stored on the payment terminal
- Transfers EFT data to a message broker over TLS 1.2 (or later) for direct translation via HSM into payment service provider required encryption. This is a different process for handling encryption to that described in the EP 2,996,079 B1.
- Supports one to many number of payment service providers, PSP's. This is in contrast to the hardware limited version of EP 2,996,079 B1.
- Switches merchant payment industry information on the payment terminal for each airline or other merchants
- Allows multiple airlines or other merchants to use a single payment terminal
- Sends to multiple payment service providers, PSP for a single airline or other merchants. This may be based on a location/region
- Adheres to PCI Point-to-Point Encryption (P2PE) as the data is encrypted at the read-head therefore reducing the PCI compliance scope for a merchant and airport or other location

Further, embodiments of the invention enable full chip-and-pin payments according to the Europay^{™}, Mastercard^{™}, and Visa^{™}, EMV standard on shared infrastructure, using attended and unattended Payment Terminals as common equipment. The shared Payment Terminals allow multiple airlines or other merchants to authorize credit card payments with multiple payment service providers, PSPs. This includes the use of credit cards, mobile devices and digital payment applications.

Embodiments of the invention allow airlines to configure different payment service providers, PSPs and payment options based on region. Embodiments of the invention solution reduces e application, airport platform software and/or airport network from the Payment Card Industry, PCI, Data Security Standard, DSS, scope in the distributed airport system.

Embodiments of the invention seek to comply to the Payment Card Industry, PCI, point-to-point encryption, P2PE, specifications for payment data encryption with certification.

Embodiments of the invention may comprise a gateway software installed at each platform workstation attached to a certified secure reading and exchange Payment Terminal. Payment Terminal connectivity may be over USB, serial connection or by separate network connections.

### BRIEF DESCRIPTION OF THE DRAWINGS

Embodiments of the invention will now be described, by way of example only, and with reference to the accompanying drawings, in which:
Figure 1 is a data flow diagram of a payment platform embodying the invention;
Figure 2 is a sequence flow diagram showing the main steps performed by an embodiment of the invention; and
Figure 3 is a continuation of the sequence flow diagram of figure 2.

The following description is of a kiosk application for use by any one of a number of merchants such as airlines but this is exemplary and other applications of the invention will be also be discussed.

For example, embodiments of the invention may also find application in any shared or common use environment, where multiple merchants share common space, workstations, mobile, kiosks, self-bag drop and other infrastructure. Exemplary environments are: airport kiosks, parking, ground transportation, gates and check-in areas; buses, hotel check-in/out areas, kiosks and room based ordering services; government services; security, license provisioning, park passes, vendor provisioning; shopping mall, multi-merchant stores or markets, retail order and checkout; car rental kiosks; telephone card dispensing; food court ordering and pickup; takeout and food ordering systems; train ticketing and check-in; and taxi stands. The embodiments of the invention may have general application in the transportation or travel industries and moreover in any environment where infrastructure is shared by a number of different users, such as shipping, rail, and road transportation.

Airline check-in kiosks use a common standard referred to as Common Use Self-Service, CUSS which is a standard administered by IATA and seeks to allow multiple airlines to share kiosks to facilitate check-in while maintaining individual airline branding and functionality. Another standard referred to as Common Use Passenger Processing System, CUPPS, has also been proposed. Advantageously, embodiments of the invention are able to operate on both CUSS and CUPPS platforms.

The proposed CUPPS standard also permits agent devices and so components developed for a kiosk, within this standard, may also be used for an agent device. An agent device is one used by the airline representative or agent to check in or assist a passenger.

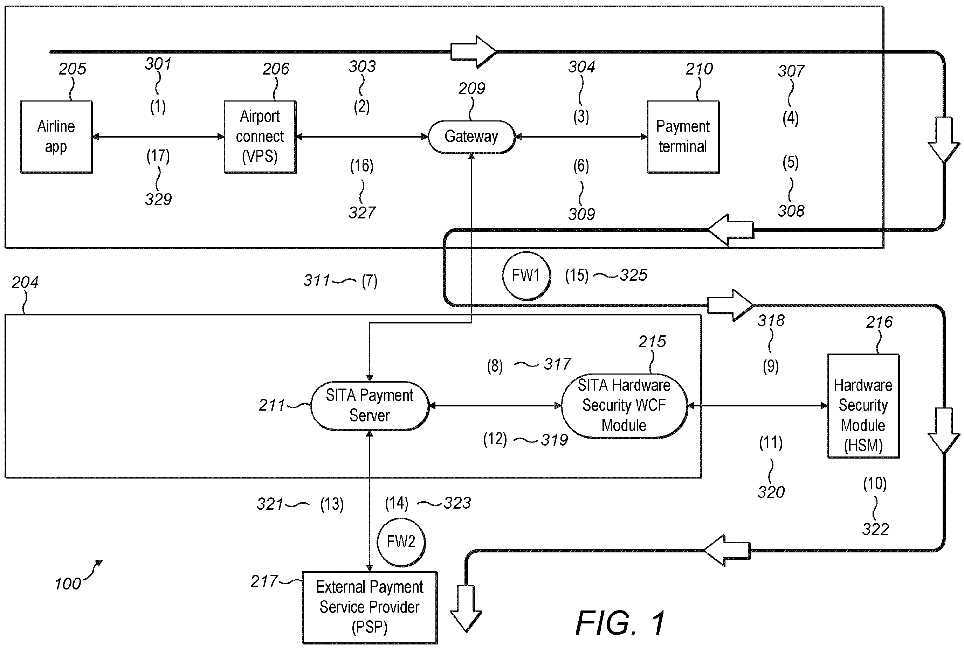

Referring now to Figure 1, this is a data flow diagram of a payment platform running on a workstation embodying the invention.

### Data Flow Across Interfaces

The following section describes the data flow according to embodiments of the invention with particular focus on the transport protocol, message format, encryption, and data payload.

Due to the sensitivity of credit card information and the financial risk involved in processing this data, the credit card information (defined as credit card number, expiry date, owner name, security code, and PIN) is encrypted at the message level (as opposed to just the transport level, e.g. HTTPS) at all times throughout the process both at rest and during transmission.

The data is encrypted at the card reader head and remains encrypted until it is delivered to the external PSP. The only exception is on the hardened HSM module where the information is decrypted with the SITA key and re-encrypted with the PSP key. The card data is not stored at any stage according to embodiments of the invention and usually, each PSP key is different.

Usually, a payment request comprising payment information is received by a module, such as any one or more of modules 206, 209, 210, 211, 215, 216, or 217. As described below, one or more of these modules may pass on the payment request without modification to other modules.

The payment information may comprise any one or more of a transaction amount in a particular currency and a merchant identifier or transaction identifier. Usually, the payment information is transmitted from an airline app 205 to an external payment service provider 217 via any one or more of the modules 206, 209, 210, 211.

Usually, the payment information is not encrypted at the message level. It may however be encoded.

Payment data is also generated, usually by reader 210. The data usually comprises an encrypted Primary Account Number, PAN, and optionally an encrypted PIN which is generated by reader 210.
As described below, the payment data is transmitted from the payment terminal 210 via one or more of the modules 209, 211, 215, 216 to an external payment service provider. According to particular embodiments, the payment data is usually encrypted at all steps between reader 210 and the external payment service provider 217. Is not essential for the payment data to include a PIN or encrypted PIN because some transactions may be authorised by an external payment service provider without PIN.

### Flow Description

Referring now to figure 1 of the drawings, the largest arrows indicate the general process direction from airline application 205 to payment service provider, when a payment request is made by an airline application.

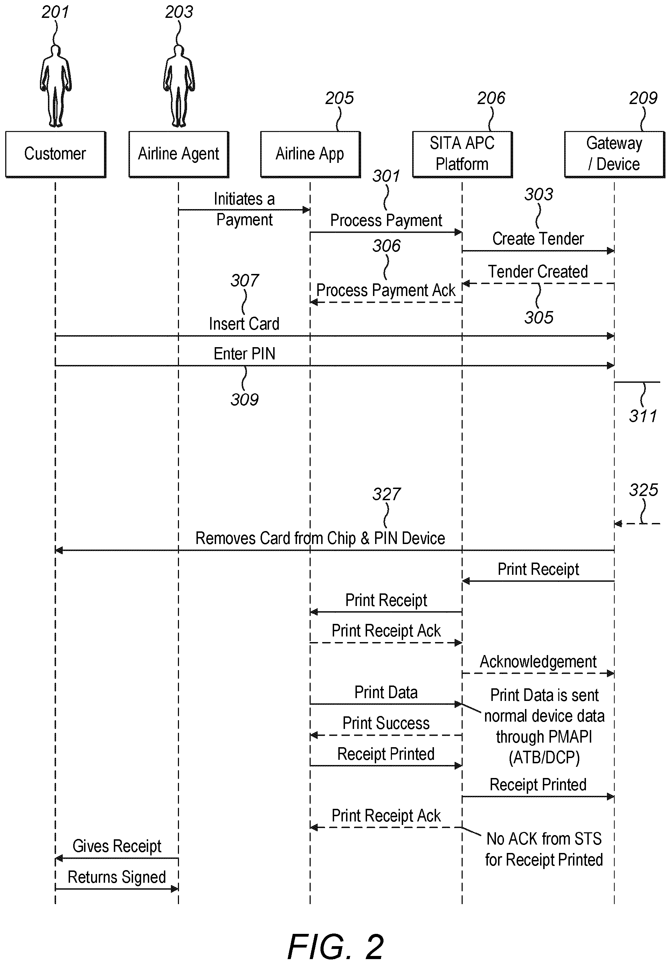

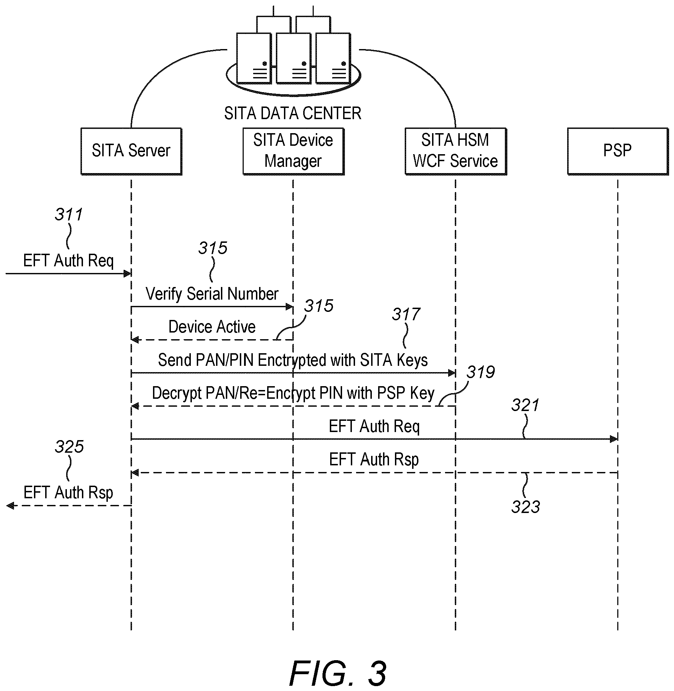

Further, figures 2 and 3 for the drawings show the complete data flow according to an embodiment of the invention.

In the following description, the functionality of each component will be described with reference to the messaging 301 to 313 labelled in figures 2 and 3. Key steps performed by each functional component are labelled by the reference numerals (1) to (17) shown in figure 1, and referred to under the headings 1 to 17 below.

The following terminology listed in table 1 below will be used in the detailed flow description.

**Table 1: Definition of terms.**

| **Term** | **Definition** |
|---|---|
| CDE | Customer Data Environment |
| CHD | Card Holder Data |
| CUPPS | Common Use Passenger Processing System which relates to a specification for solution for check-in and boarding gates |
| CUSS | Common Use Self Service which relates to a specification for self-service kiosks |
| CUTE | Common Use Terminal Equipment which relates to a solution for check-in and boarding gates |
| DE | Decryption environment |
| DSS | Data Security Standard |
| EMV | Eurocard, MasterCard, Visa which is a group which administers chip card payment transaction specification and certification. |
| FOID | Form of ID |
| HSM | Hardware Security Module. It relates to a payment specific device that provides secure encryption/decryption, PIN block encryption translation and reformatting as well as PAN encryption translation. |
| P2PE | Point to Point Encryption |
| PAN | Primary Account Number |
| PCI | Payment Card Industry |
| PED | PIN Entry Device |
| PIN | Personal Identification Number |
| PM API | Peripheral Manager Application Program Interface |
| POI | Point of Interaction |
| POS | Point of sale |
| PSP | Payment Service Provider |
| SRED | Secure Reading and Exchange of Data |

### Computing Device 100

The following description assumes that a Computing Device 100, also referred to as a Point of Interaction device is delivered to a particular location.

The term computing device usually refers to a workstation or kiosks which usually includes a card reader.

As will be explained in further detail below, a module 209, also referred to as a Gateway, receives payment data or information such as an account number or credit card data. In addition, the module usually receives Payment Terminal information for example any one or more of a serial number associated with the Computing Device 100, terminal type of the Computing Device 100, transaction number, an airline name as well as location information. The location information may be in the form of any one or more of workstation identifier = WKS1, and a location code, in particular an airport code such as JFK or LHR.

Use of a location code is beneficial because non airport locations, such as Car Rental Locations, Hotel Locations and so on may be defined using an alpha-numeric string or longitude and latitude information. This information may uniquely identify a particular location.

The workstation or kiosk 100 including Payment Terminal is shown in figure 1 of the drawings. The following description assumes that an engineer has installed the Computing Device 100 at a particular location.

This usually includes providing wired or wireless connectivity to the Computing Device 100 at the particular location using known wired or wireless protocols.

Typically the computing device 100 comprises a computer, server or other hardware comprising a processor which is communicatively coupled to a contact or contactless payment device or payment terminal. The payment terminal may be incorporated into a mobile or portable communication device such as a laptop or other mobile computer. The payment terminal is shown as payment terminal 210 in figure 1 of the drawings. Referring now to figure 1 of the drawings, this shows the various different functional components which may be part of a payment workstation 100 or kiosk and server. The server 204 is remote from the computing device 100. A wireless or wired communications link between the server 204 and computing device 100 may be provided. The merchant applications are configured to run, or be executable on, a computing device.

### Airline application 205

### 1. The airline application requests a transaction

The airline application 205, either agent facing or self-service, initiates a payment transaction, 301 by requesting a credit card transaction via the SITA Flex platform 206. The airline application 205 acquires the Computing Device 100 with an airline code, such as 001 which maybe a code associated with American Airlines. The airline code is used as the merchant of record for the transaction. Other information such as workstation name, and location/airport code is provided by the platform. The airline application 205 then connects to the SITA Platform 206. This may be performed via a Performance Metrics API (PMAPI) for CUTE/CUPPS (C PMAPI for NET/C++ apps, and Java PMAPI for Java apps), CUSS Interface (e.g., CORBA or other) or SITA Flex API for the Kiosk or workstation 100. As part of acquisition of the kiosk or workstation 100, the airline application 205 informs the platform of the airline that the application intends to acquire the Computing Device 100. The SITA Platform 206 determines the location of where the Computing Device 100 has been acquired.

### Determining the location of Computing Device 100 acquisition

The SITA Platform 206 is a deployed platform that not only includes the services installed on the workstation but also a set of lock down policies to secure the machine to only be used by airline/airport staff. Part of the configuration of the platform 206 is the location code, such as JFK for John F Kennedy Airport and workstation name WKS=00553 which is used when the airline acquires the devices from computing device 100. Accordingly, the airline acquires the payment terminal 210 from computing device 100 via the platform 206 with the airline code. The platform 206 then provides the location code and workstation name.

The location of where the computing device 100 has been acquired can then be determined. This may be by way of a look up table but other methods will be known to the skilled person. The location may be abstracted from the airline so that a particular airline does not need to know the location where they are running.

Further functionality may be provided, for example in the backend solution which may use the workstation or/and airport code to send to a particular Payment Service Provider 217 of the airline's choosing for that location, as well as use that information to validate that this Computing Device 100 is one that should be allowed to connect to the rest of the system and is installed in a predetermined and known location.

In addition the transactions sent to the backend solution are tagged with the serial device number of the Payment Terminal, therefore giving us an added security to know that this is a trusted Payment Terminal which has been deployed correctly. This is part of the PCI P2PE requirement to validate they Payment Terminal and transactions. The request 301 usually comprises credit card information but in addition, the request may comprise any one or more of Payment Terminal information (such as a serial number, terminal type) and transaction number, and airline name as well as location information such as workstation, airport code. The request 301 is passed to an airport connect platform 206.

### Airport Connect Platform 206

### 2. The platform 206 then passes the request 303 to the Gateway 209

Usually, the gateway 209 controls the Payment Terminal. The SITA platform 206 usually comprises of a local pass-through interface. The SITA platform 206 also provides common APIs to each of the multiple airline applications 205 running on the Computing Device 100.

In this way, the acquired Computing Device 100 shown in figure 1 of the drawings provides a common interface for each of the multiple airline aps 205 running on the Computing Device 100. The airline uses the same interface to interact not only to a Payment Terminal but also to other devices such as a boarding pass printer, bag tag printer, boarding gate reader, etc.

The Airport Connect platform 206 usually connects via a socket and passes the create tender request 303 the Gateway 209.

The SITA Flex Platform 206 may comprise a virtual device manager in the SITA Virtual Peripheral Service. Usually, the SITA Virtual Peripheral service manages all common use peripheral devices. The device manager parses SITA CUTE/CUPPS Payment API requests in order to identify a multi-message payment transaction. The API client transaction state is maintained and used to mediate device locking and new transactions start messages when the Payment Terminal is shared by simultaneous multiple airline clients. Default device lock processing is overridden to allow payment transaction states to be considered.

### Gateway 209

### 3. The Gateway 209 readies the reader 210

The Gateway 209 readies the Payment Terminal 210 for a swipe, chip or contactless transaction via commands over a USB connection between Payment Terminal and Computing Device 100. The Gateway 209 is configured to run the software that connects to the Payment Terminal 210 using a VeriFone or other interface. This software also sends the merchant specific settings to the Payment Terminal 210 such as limits, cards accepted, and other various settings to the Payment Terminal 210 for that merchant.

When called, the Payment Terminal 210 is configured so that it contains the financial rules, credit cards, type of transactions allowed, for example contact or contactless payment agreed on by the airline and payment service provider, PSP, on the Payment Terminal. As part of this process messages may be displayed on the Computing Device 100. In this way, messages and images shown on the display may configured according to a particular airline's choosing. For example, different text and language settings may be configured or used for each airline. In addition, different logos or and videos pay be provided for each airline for example in accordance with airline branding.

Usually, the Computing Device 100 is shared amongst various airlines so that the functional features provided on the Computing Device 100, may change for each airline or merchant user of the workstation or kiosk 100. Usually, each airline or user has an associated, and usually different, application 205 running on the Computing Device 100.

The gateway 209 is configured to support multiple point of sale, POS, applications per connected Payment Terminal 210. Usually, the software deploys as a single JAVA application loaded as a Windows service on the Airport Connect workstation image. The software manages Payment Terminal 210 communications and merchant payment transaction workflow. The software segregates the payment request communication channel from the payment service provider channel. Advantageously, the POS message APIs contain no unmasked cardholder data. The cardholder masked primary account number, PAN is provided to the IATA CUSS API for FIOD that contains passenger name and masked PAN only. This FOID data format ensures compliance to PCI requirements for in-scope components.

The configuration of the Gateway, part of which is used to configure the Payment Terminal 210 at start-up, is deployed as property text files with the Gateways software. The System Integration department separates the deployment of the properties files from the Gateway Java software, using either deployment packages or MSI files depending on the airport site. The System Integration department creates the packaging for the software to be deployed on workstations and kiosks, along with the APC software. This can allow for software to be updated independently from the properties files. The property files contain the merchant specific settings to be loaded on the Payment Terminal 210. This includes credit card limits, cards accepted, and possibly whitelist for the Payment Terminal 210, currency, as well as display information.

### Payment Terminal reader 210

### 4. Card or device swiped

The user, for example the agent or customer then swipes or inserts the credit card, at step 307, into the Payment Terminal reader 210. The card or mobile device can also be tapped on the contactless reader for contactless transactions. The credit card information is encrypted at the card reader 210 head by the firmware. This may be performed using 256-bit, AES DUKPT encryption. The keys stored in the reader device 210 are SITA keys. One key is generated for the primary account number, PAN. A second key is generated for the PIN. The payment data is transmitted from the reader 210 to the module 209 at step 304. Usually the payment data comprises payment card information in particular any one or more of a card number, expiry date, owner name, security code and any additional information the payment service provider requires to validate the payment transaction.

The SITA Keys are secured keys and are generated by the Hardware Security Module (HSM) 215. This module 215 stores, generates keys and encrypts/decrypts data. It uses a PCI P2PE process where we have 2 or more key custodians and also key administrators. Each Key Custodian only knows a portion of the full SITA keys generated from the HSM. This process is done twice for each key (PIN Key, and PAN Key) and each key is distinct.

A software service is usually provided "in front" of the Hardware Security Module 215. The message broker, also referred to as a SITA Payment Server 211 communicates with the Hardware Security WCF service 215. The service 215 then communicates with the Hardware Security Module. The service 215 sends the encrypted PIN and PAN data, usually separately, along with the appropriate HSM commands to translate or re-encrypt the data from SITA encrypted data to PSP encrypted data using PSP provider keys.

The Hardware Security WCF Service 215 also performs a look up in the SQL Server to determine which key, from a plurality of keys, is used to re-encrypt the data.

In this manner, the data can be separated into a more secure environment in a Data Center. It also allows embodiments of the invention to use different Hardware Security Modules 216 provided by different manufacturers of the Hardware Security Modules without needing any changes to the Message Broker or Payment Server 211.

Usually a separate provider or functionality is used for providing the necessary messaging for the card and pin services. In this case, each key is sent to the payment services provider via two different secure channels such as FedEx and UPS so the full SITA key cannot be compromised. On the payment services provider side, they have two or more key custodians who again can't interact with each other and load the key to their HSM. Advantageously more than 2 key custodians, such as 3 key custodians may be used if 3 key parts are used.

From the payment services provider HSM a SITA key is generated for PIN and PAN and are loaded onto the Payment Terminal 210 directly at a Key Injection Facility (KIF). The Payment Terminal 210 is then shipped to the airport where the multi-merchant solution is be deployed.

In this way payment service providers send keys in two or more parts and the above process is followed with the key custodians to accept and load the key to HSM. In this way, no single person or entity knows the full key and two or more key custodians do not even report to the same manager.

Using one or more keys ensures that the hardware security module, HSM, 215 held in the SITA Common Use Payment solution is the only module 215 able to re-encrypt the data to a payment service provider, PSP.

### 5. The user enters a PIN

The user enters a PIN number on the hardware's 210 keypad, if required. The PIN is then encrypted, at step 308. This may be performed using 256-bit, AES DUKPT encryption. The credit card, CC, data usually comprises the primary account number, PAN, the Personal Identification Number, PIN, an account holder name and a card expiry date.

### 6. The reader forwards encrypted data to the gateway 209

The encrypted credit card data is forwarded from the reader 210, at step 309, to the Gateway 209 via the connection between the Payment Terminal 210 and Computing Device 100. The connection may be USB, Serial, Network or possibly other type of connection which will be known to the skilled person.

### Gateway 209

### 7. Encrypted data forwarded to payment server 211

The Gateway 209 then forwards, at step 311, the encrypted credit card, CC, data to the Payment Server 211. The Payment Server 211 has the functionality of a message broker functionality running on a server 211.

Usually, step 311 is performed using a HTTPS connection using TLS 1.2 transport encryption. This may be performed using a wired or wireless connection which will be known to the skilled person. As shown in figure 2, the Computing Device 100 and application server 204 - which usually runs in a data center, are communicatively coupled to each other using a wired or wireless communications protocol which will be known to the skilled person.

Along with the payment card information (PAN, PIN, AID, etc), the message sent at step 311 comprises metadata that contains enough information for the SITA Common Use Payment Service 211 to be able to route the data to the airline's (merchant) PSP of their choosing. The serial Number of the Payment Terminal 210 and workstation are used to validate or verify at step 313 that the Payment Terminal 210 is a trusted Payment Terminal and is able to transmit payment transactions. This allows embodiments of the invention to enable or disable the Payment Terminal as needed at step 315. This also helps with monitoring to determine if a Payment Terminal 210 has been switched at the airport level without proper authorization.

The SITA Common Use Payment server 211 is also flexible enough to enable routing from the same airline in different geographic regions to a PSP that may be more beneficial in different regions.

### Payment Server 211

### 8. Encrypted data forwarded to HSM 215

The payment server 211 has a number of different functionalities.

From the above, it will be understood that the module (209) is configured to transmit metadata to the payment server. The metadata comprises any one or more of a merchant identifier, a workstation name, a location identifier or code, a serial device number, a transaction identifier for merchant tracking information to the payment server (211).

Usually, the payment server 211 passes the metadata on to the external payment service provider 217. Not all of the information or metadata needs to be passed on to the payment service provider 217. For example, the merchant ID and Serial Number is passed on to external payment service provider 217 according to specific embodiments. The workstation and location are used internally and not passed on to external systems such as a payment service provider 217. The workstation and location may be referred to as a terminal identifier.

Firstly, the server 211 determines the correct Payment Service Provider to route the payment request to for each merchant. This may be performed by way of a look-up table. The following table shows an exemplary look up-table for a plurality of different merchants, different locations and different payment service providers.

**Table 2: An exemplary look-up table used by the payment server 211.**

| **IATA merchant identifier** | **Location identifier** | **PSP identifier** |
|---|---|---|
| BA | UK | Provider 1 |
| BA | US | Provider 2 |
| AA | UK | Provider 1 |
| AA | US | Provider 1 |
| AA | CN | Provider 1 |
| SQ | UK | Provider 1 |
| SQ | US | Provider 2 |
| SQ | CN | Provider 3 |

The functionality may also be performed by the server or module 211. The two letter merchant identifiers are associated with different merchants. For example, BA stands for British Airways^{™} while AA stands for American Airlines^{™} and SQ stands for Singapore Airlines^{™}.

Similarly, the two letter location identifiers are associated with different geographical regions. For example. UK stands for United Kingdom, US stands for the United States, CN stands for The People's Republic of China.

The SITA Payment Server 211 obtains the encrypted PSP key from a local SQL Server database. Usually, clear keys are not stored on the SQL server. Rather an index which is an encrypted key, that is used to call the HSM which can be decrypted. The SQL Server is housed with the Hardware Security Module 215 and may be segmented out in a separate LAN according to specific embodiments. One way to access this is via the Hardware Security Module 215, which is shown in the drawings as a DB PCI VLAN.

The SITA Payment Server 211 then passes the encrypted credit card, CC, Data and the encrypted PSP key to the SITA Hardware Security Module 215, at step 317. Usually this is performed using an HTTPS (TLS 1.2 or later) connection. The SITA Common Use Payment Server 211 can re-encrypt the data in the backend with the key of the PSP of the airline's (merchant) choosing. Usually, re-encryption a PIN Translation is performed where the PIN is decrypted and encrypt it with the PSP that the airline chooses prior to sending it to the PSP. Usually, the HSM performs this functionality on the machine so embodiments of the invention do not use a PIN that is in the clear. A similar process may be adopted for the PAN although most PSPs request the PAN to be in the clear or base64. At this point the exchange of data is between two secure networks with no recording of PIN or PAN according to specific embodiments of the invention.
It will be appreciated that the Payment Server 211 communicates with the SITA Hardware Security WCF service in module 214. The module 214 then communicates with the HSM 216.

The SITA Hardware Security WCF Service module 214 also performs a look up in the SQL Server for which key to re-encrypt the data.

This allows for the data to be separated into a more secure environment in the Data Center. Further, it allows flexibility in that different HSM provider may be used without a change to the Message Broker or SITA Payment Server 211.

The SITA HSM WCF module 215 has the functionality of receiving an encrypted payment service provider key from a server such as a local SQL server.

If there are multiple different payment service providers and multiple different payment service provider keys, the module 215 determines which of a plurality of PSP keys to transmit to a third module (216) based on a look-up table of a plurality of PSP identifiers and associated PSP keys. An exemplary look-up table is shown in table 3.

**Table 3: An exemplary look up table which may be stored on the module 215.**

| **Payment Service Provider ID** | **PSP key for PIN** |
|---|---|
| PSP1 | Key1 |
| PSP2 | Key2 |
| PSP3 | Key3 |

The 4 letter alpha numeric codes for each PSP represent keys, usually an encrypted key, for each payment service provider.

In this way, the module 215 determines the correct and usually encrypted PSP key corresponding to a particular payment service provider.

The module 215 uses Location, Airline and Workstation identifiers to determine key references to use to decrypt/encrypt data. Further, the payment server 211 usually uses the same identifiers to determine routing to proper PSP.

### 9. Encrypted data forwarded to HSM 216

The SITA Hardware Security Module 215 transmits the encrypted credit card, CC, Data and the correct and encrypted PSP key to the HSM 216, at step 318. Usually this is performed using a socket or Simple Object Access Protocol (SOAP) connection. In addition, the module 215 usually transmits the PAN encrypted according to a first SITA key (SK1) and PIN encrypted according to a second SITA Key (SK2) to the module 216. Some implementations may not require the PAN to be encrypted according to the first key.

### 10. HSM 216 decrypts card or payment data and re-encrypts using PSP key

The HSM 216 decrypts the PAN using the first SITA key (SK1) and decrypts that PIN using the second SITA Key (SK2), at step 322. The module 216 then re-encrypts this data with the correct Payment Service Provider key. Only the module 216 has the key to decrypt the encrypted payment service provider key. In this way, the HSM 216 decrypts the credit card, CC, data and re-encrypts it using the PSP key and in the appropriate PSP format.

Usually, the HSM 216 stores each of the first SITA key (SK1), and the second SITA key (SK2) and also key to decrypt encrypted payment service provider key in a local storage medium.

In the exemplary table 3 shown above, only a single key is provided for each payment service provider which is a key for PIN encryption. Some payment service providers do however require PAN encryption. In this case, the look up table shown in table 3 is modified to have 2 different keys associated with each payment service provider. One is a PSP key for the PIN, and the other is a PSP key for the PAN.

Decryption and re-encryption of the data which is exchanged between HSM's 215 of 216 will be explained in further detail below.

Re-encryption is advantageous because without performing this step embodiments of the invention would send data encrypted with a specific key which will not be known to third parties.

Accordingly, embodiments of the invention re-encrypt with the PSP key provided via a key exchange ceremony. By having one SITA key on all the Payment Terminals embodiments of the invention may account for multi-merchant on the device because the device is holding one single key rather than each key per merchant. Thus, the HSM 216 may perform the functionality of decrypting or encrypting (Decrypt/Encrypt with a third party key). Usually, one SITA key is stored on the payment device only.

The HSM 216 then re-encrypts the PIN Block with the Airline key. Usually this is performed using a 3DES Algorithm or direct DUKPT to DUKPT translation. The Airline Key and PSP key may be the same key. Preferably they are different keys. This is the same key that is exchanged with the PSP and it may be stored in a database as an encrypted index. In summary, at this step PIN data is re-encrypted from the SITA Key to the Airline/PSP key. Thus, the data is re-encrypted with the PSP key prior to sending it to the PSP. Sometimes this key is referred to as an Airline Key and this allows a single PSP to have various key for each merchant. Usually, the keys are per PSPs rather than per airline. Usually keys are not exchanged with the airline but rather with PSPs since the data is being sent on behalf of a particular airline.

### 11. The Encrypted card or payment data forwarded to HSM 215

The re-encrypted credit card, CC, data is sent, at step 320, from the HSM 216 to the SITA Hardware Security Module 215 over the same socket as the request 318.

### 12. The Encrypted card or payment data forwarded to payment server

The SITA Hardware Security Module 215 then forwards the credit card, CC, data to the SITA Payment Server 211 as the response message 319 to the HTTPS request 317.

### 13. Encrypted card or payment data forwarded to PSP 217

The SITA Payment Server 211 then forwards the credit card, CC, data and payment request, at step 321 to the payment service provider, PSP, 217 via its defined interface, i.e. transport protocol and message format. The SITA Payment Server can connect to any payment service provider interface, using as example, but not limited, to the following interfaces and protocols such as XML and ISO8583.

Using the airline code and airport code allows embodiments of the invention to route to the proper payment services provider for that transaction for that airport. As explained above, for a different airline in the same airport embodiments of the invention can route to a different payment service provider. Further, for the same airline in a different airport code embodiments of the invention can route to a different payment service provider.

In summary, the SITA Payment server (211) routes to the correct payment service provider using the previously determined payment service provider identifier, as explained under step 8 above.

The choice of protocol and message format which each PSP uses may vary.

For example, for one PSP, embodiments of the invention send an XML message in form of an EFT Message. But other PSPs may use a different format because a particular API provided by a payment service provider. Other payment service providers may follow a similar XML message format that is based on ISO8583. This is may be handled in the Message Broker part of the solution which translates the internal XML message received from the Payment Terminal 210, to the SITA Payment Server which translates it out to a particular payment service provider. Additional translations for each payment service provider may be provided and although this may be an additional step it does not affect the other key steps apart from another key ceremony exchange.

Based on the metadata passed in under heading the heading Gateway 209 above, the SITA Payment Server is able to route to the airline's or merchant's payment service provider of their choosing. Different airlines can have different payment service providers. As explained with reference to table 2 above, the same airline can have a different PSP based on region/location.

The following description explains how, using the meta data, the payment server is able to route to the airline's merchant PSP of their choosing.

Embodiments of the invention use one or more of the previously determined location code, merchant or airline name and workstation name, along with serial Payment Terminal 210 to route the data stored in the message broker to a particular PSP that the airline has chosen.

This is a key aspect of embodiments of the invention because once a plug-in to a PSP has been created, further airlines or merchants may be added by using this routing functionality to support that airline or merchant.

Also by having the location code and workstation name, which provide the location of the Computing Device 100, this allows embodiments of the invention to route a payment transaction to a particular PSP for that airport or region. This may allow for grouping of a number of airports.

So for example suppose that the airline is American Airlines and if this airline chooses a specific PSP (such as WorldPay^{™}) in Europe because of a better rate, then routing to WorldPay^{™} may be performed based on the location code, such as LHR (London Heathrow) for example. However, if the same airline is operating a Computing Device 100 in the US but chooses another, different PSP, such as First Data in US, routing may be performed based on the fact that the transaction originating from an airport within the US, such as JFK for example. In this way embodiments of the invention are able to handle multi merchants. Of course, for a single merchant multiple PSPs may be handled. This has the advantage of providing more flexibility for airlines and an overall payment solution across the world.

### 14. PSP 217 response

The payment service provider, PSP, 217 returns the result of the payment transaction to the SITA Payment Server 211, at step 323. There is no credit card, CC, data in the response. In this way, the response message is largely unchanged in the following steps and simply forwarded back to the airline App 205.

In this way, the response data sent back to the airline does not have PAN/PIN other than a redacted PAN which may be sent to the airline application for receipt purposes. However, usually, in most transactions from payment service provider PSPs embodiments of the invention do not receive a PAN or PIN since the data is only sent to the PSP for validation or authorization/settlement but not sent back. Although the data of the response is largely unchanged, the messages may be translated to a standardized proprietor SITA message format to simplify the interaction of the system for any users.

### 15. PSP 217 response

The SITA Payment Server 211 returns the result of the payment transaction to the Gateway 209, at step 325.

### 16. PSP 217 response

The Gateway 209 returns the result of the payment transaction to the SITA Platform 206, at step 327.

### 17. PSP 217 response

The SITA Platform 206 returns the result of the payment transaction to the Airline application 205 at step 329.

Although the above example has been described with reference to a payment system for use in the aviation industry, it will be clear from the foregoing explanation embodiments of the invention may advantageously be used in any environment where a workstation, mobile, self-service or other such terminal is shared between a number of different users and when each user has their own application running on the workstation, mobile, self-service or other such terminal in which a single reader is communicatively coupled to these such terminals.

From the foregoing, it will be appreciated that the system may comprise a computer processor running one or more server processes for communicating with client devices. The server processes comprise computer readable program instructions for carrying out the operations of the present invention. The computer readable program instructions may be or source code or object code written in or in any combination of suitable programming languages including procedural programming languages such as C, object orientated programming languages such as C#, C++, Java, scripting languages, assembly languages, machine code instructions, instruction-set-architecture (ISA) instructions, and state-setting data.

The wired or wireless communication networks described above may be public, private, wired or wireless network. The communications network may include one or more of a local area network (LAN), a wide area network (WAN), the Internet, a mobile telephony communication system, or a satellite communication system. The communications network may comprise any suitable infrastructure, including copper cables, optical cables or fibres, routers, firewalls, switches, gateway computers and edge servers.

The system described above may comprise a Graphical User Interface. Embodiments of the invention may include an on-screen graphical user interface. The user interface may be provided, for example, in the form of a widget embedded in a web site, as an application for a device, or on a dedicated landing web page. Computer readable program instructions for implementing the graphical user interface may be downloaded to the client device from a computer readable storage medium via a network, for example, the Internet, a local area network (LAN), a wide area network (WAN) and/or a wireless network. The instructions may be stored in a computer readable storage medium within the client device.

As will be appreciated by one of skill in the art, the invention described herein may be embodied in whole or in part as a method, a system, or a computer program product including computer readable instructions. Accordingly, the invention may take the form of an entirely hardware embodiment or an embodiment combining software, hardware and any other suitable approach or apparatus.

The computer readable program instructions may be stored on a non-transitory, tangible computer readable medium. The computer readable storage medium may include one or more of an electronic storage device, a magnetic storage device, an optical storage device, an electromagnetic storage device, a semiconductor storage device, a portable computer disk, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk.

Exemplary embodiments of the invention may be implemented as a circuit board which may include a CPU, a bus, RAM, flash memory, one or more ports for operation of connected I/O apparatus such as printers, display, keypads, sensors and cameras, ROM, a communications sub-system such as a modem, and communications media.

In addition, the above detailed description of embodiments of the invention are not intended to be exhaustive or to limit the invention to the precise form disclosed. For example, while processes or blocks are presented in a given order, alternative embodiments may perform routines having steps, or employ systems having blocks, in a different order, and some processes or blocks may be deleted, moved, added, subdivided, combined, and/or modified. Each of these processes or blocks may be implemented in a variety of different ways. Also, while processes or blocks are at times shown as being performed in series, these processes or blocks may instead be performed in parallel, or may be performed at different times.

The teachings of the invention provided herein can be applied to other systems, not necessarily the system described above. The elements and acts of the various embodiments described above can be combined to provide further embodiments.

While some embodiments of the inventions have been described, these embodiments have been presented by way of example only, and are not intended to limit the scope of the disclosure. Indeed, the novel methods and systems described herein may be embodied in a variety of other forms; furthermore, various omissions, substitutions and changes in the form of the methods and systems described herein may be made without departing from the spirit of the disclosure.

Features of the invention may be further described by the following numbered clauses.
1. A payment processing system comprising:
   a. a module (209) configured to:
      i. receive a payment request (303) for a payment transaction from one of a plurality of different merchant applications associated with a computing device (100) wherein the request comprises payment information comprising a merchant or transaction identifier;
      ii. in response to receiving the payment request, receive (304) encrypted payment data from a reader (210) coupled to the computing device (100) wherein the payment data comprises an account number associated with a user wherein the account number is encrypted according to a first key; and
      iii. transmit (311) the payment information and the encrypted payment data to a payment server (211).
2. The payment processing system according to clause 1 wherein the module is further configured to receive (304) further encrypted payment data comprising a PIN number encrypted according to a second key for the PIN number wherein the first key is different from the second key.
3. The payment processing system according to any preceding clause wherein the module (209) is further configured to transmit metadata comprising any one or more of a merchant identifier, a workstation name, a location identifier or code, a serial device number, a transaction identifier for merchant tracking information to the payment server (211).
4. The payment processing system of any preceding clause wherein the payment request (303) comprises device information in particular any one or more of the or a device serial number, a terminal type, the or a transaction number, the or a merchant identifier as well as location information associated with the computing device (100) or the or a location identifier or code.
5. The payment processing system according to any preceding clause wherein the module (209) is further configured to transmit data which allows the payment request to be routed from one of a plurality of different merchants in different regions to one of a plurality of different payment service providers in each region.
6. The payment processing system according to any preceding clause wherein the module (211) is further configured to determine one of a plurality of different payment service providers to route the payment request to based on any one or more of a merchant identifier and the or a location information or code and a particular payment service provider identifier and a comparison with a look-up table.
7. The payment processing system according to any preceding clause further comprising a second module (215) configured to receive an encrypted payment service provider key from a server.
8. The payment processing system according to clause 7 wherein the second module (215) determines which of a plurality of payment service provider keys to transmit to a third module (216) preferably based on a look-up table of a plurality of payment service provider identifiers and associated payment service provider keys and preferably wherein each payment service provider key is encrypted.
9. The payment processing system according to any preceding clause wherein the second module (215) is configured to transmit the encrypted payment data and the encrypted payment service provider key to a further security module (216).
10. The payment processing system according to any preceding clause wherein the or a further security module (216) is configured to decrypt the encrypted payment data using the first key and preferably using the second key.
11. The payment processing system according to any preceding clause wherein the or a further security module (216) is further configured to decrypt the encrypted payment service provider key using a further key and to re-encrypt the decrypted payment data using the decrypted payment service provider key.
12. The payment processing system according to any preceding clause wherein the or a security module (216) is further configured to encrypt the payment data according to a particular payment service provider format.
13. The payment processing system according to any preceding clause wherein the or a further security module (216) is further configured to transmit the payment data encrypted using the payment service provider key to the security module (215).
14. The payment processing system according to any preceding clause wherein the or a security module (215) is further configured to transmit the payment data encrypted using the payment service provider key to the payment server (211).
15. The payment processing system according to any one of clauses 5 to 13 wherein the payment server (211) is further configured to transmit the payment data to a particular payment service provider preferably based on the determined payment service provider identifier.
16. The payment processing system according to any preceding clause wherein the reader (210) is further configured to receive a validation response of the payment request preferably via the module (209) and further preferably via the payment server (211).
17. The payment processing system according to any preceding wherein the payment data is encrypted at a message level and preferably wherein the payment data comprises payment card information in particular any one or more of a card number, expiry date, owner name, security code and payment transition validation data.
18. The payment processing system according to any preceding clause wherein the payment data is encrypted at all stages between the reader (210) and a payment service provider (217).
19. A payment processing system comprising:
   a. a payment server (211) configured to:
      i. receive payment data for a payment request wherein the payment data comprises an account number encrypted according to a first key;
      ii. receive payment information for the payment request wherein the payment information comprises a merchant or transaction identifier;
      iii. determine a payment service provider based on the merchant or transaction identifier and a location identifier
      iv. transmit the encrypted payment data and the determined payment service provider to a security module (215).
20. The payment processing system according to clause 19 wherein the payment server (218) is further configured to receive payment data comprising a PIN number encrypted according to a second key for the PIN number wherein the first key is different from the second key.
21. The payment processing system according to according to clause 18 to 20 wherein the payment server (211) is further configured to:
   i. receive an account number encrypted according to a payment service provider key and preferably a PIN number encrypted according to the payment service provider key or a further payment service provider key;
   ii. transmit the account number encrypted according to the payment service provider key and preferably the PIN number encrypted according to the payment service provider key or the further payment serviced provider key to a payment service provider based on the determined payment service provider identifier.
22. A payment processing system comprising:
   i. a security module (215) configured to receive data identifying a payment service provider and data identifying a payment transaction or payment information;
   ii. determine an encrypted payment service provider key associated with the payment service provider;
   iii. receive (317) encrypted payment data comprising an account number encrypted according to a first key and preferably receiving (317) further encrypted payment data comprising a PIN number encrypted according to a second key for the PIN number wherein the first key is different from the second key; and
   iv. transmit (311) the data identifying the payment transaction or payment information and the encrypted payment data to a further security module (216).
23. The payment processing system according to clause 22 wherein the security module is further configured to transmit an encrypted payment service provider key to the further security module (216).
24. The payment processing system of clause 22 or 23 further wherein the security module (215) is further configured to receive (320) encrypted payment data associated with the data identifying the payment transaction or payment information, wherein the encrypted payment data comprises an account number encrypted according to the or a payment service provider key and preferably receiving (320) further encrypted payment data comprising a PIN number encrypted according to the payment service provider key or a further payment service provider key for the PIN number.
25. A computer program product which when executed performs a method according to any preceding clause.

## Claims

1. A payment processing system comprising:
a. a module (209) configured to:
i. receive a payment request (303) for a payment transaction from one of a plurality of different merchant applications associated with a computing device (100) wherein the request comprises payment information comprising a merchant or transaction identifier;
ii. in response to receiving the payment request, receive (304) encrypted payment data from a reader (210) coupled to the computing device (100) wherein the payment data comprises an account number associated with a user wherein the account number is encrypted according to a first key; and
iii. transmit (311) the payment information and the encrypted payment data to a payment server (211).

2. The payment processing system according to claim 1 wherein the module is further configured to receive (304) further encrypted payment data comprising a PIN number encrypted according to a second key for the PIN number wherein the first key is different from the second key.

3. The payment processing system according to any preceding claim wherein the module (209) is further configured to transmit metadata comprising any one or more of a merchant identifier, a workstation name, a location identifier or code, a serial device number, a transaction identifier for merchant tracking information to the payment server (211), or wherein the module (209) is further configured to transmit data which allows the payment request to be routed from one of a plurality of different merchants in different regions to one of a plurality of different payment service providers in each region.

4. The payment processing system of any preceding claim wherein the payment request (303) comprises device information in particular any one or more of the or a device serial number, a terminal type, the or a transaction number, the or a merchant identifier as well as location information associated with the computing device (100) or the or a location identifier or code.

5. The payment processing system according to any preceding claim wherein the module (209) is further configured to determine one of a plurality of different payment service providers to route the payment request to based on any one or more of a merchant identifier and the or a location information or code and a particular payment service provider identifier and a comparison with a look-up table.

6. The payment processing system according to any preceding claim further comprising a second module (215) configured to receive an encrypted payment service provider key from a server, preferably wherein the second module (215) determines which of a plurality of payment service provider keys to transmit to a third module (216) preferably based on a look-up table of a plurality of payment service provider identifiers and associated payment service provider keys and preferably wherein each payment service provider key is encrypted, and preferably wherein the second module (215) is configured to transmit the encrypted payment data and the encrypted payment service provider key to a third module (216).

7. The payment processing system according to any preceding claim wherein the or a third module (216) is configured to decrypt the encrypted payment data using the first key and preferably using the second key, preferably wherein the third module (216) is further configured to decrypt the encrypted payment service provider key using a further key and to re-encrypt the decrypted payment data using the decrypted payment service provider key, and preferably wherein the third module (216) is further configured to encrypt the payment data according to a particular payment service provider format.

8. The payment processing system according to any preceding claim wherein the or a third module (216) is further configured to transmit the payment data encrypted using the payment service provider key to the second module (215).

9. The payment processing system according to any preceding claim wherein the or a second module (215) is further configured to transmit the payment data encrypted using the payment service provider key to the payment server (211).

10. The payment processing system according to any one of claims 5 to 9 wherein the payment server (211) is further configured to transmit the payment data to a particular payment service provider preferably based on the determined payment service provider identifier.

11. The payment processing system according to any preceding claim wherein the reader (210) is further configured to receive a validation response of the payment request preferably via the module (209) and further preferably via the payment server. (211).

12. The payment processing system according to any preceding claim wherein the payment data is encrypted at a message level and preferably wherein the payment data comprises payment card information in particular any one or more of a card number, expiry date, owner name, security code and payment transition validation data.

13. The payment processing system according to any preceding claim wherein the payment data is encrypted at all stages between the reader (210) and a payment service provider (217).

14. A payment processing system comprising:
a. a payment server (211) configured to:
i. receive payment data for a payment request wherein the payment data comprises an account number encrypted according to a first key;
ii. receive payment information for the payment request wherein the payment information comprises a merchant or transaction identifier;
iii. determine a payment service provider based on the merchant or transaction identifier and a location identifier; and
iv. transmit the encrypted payment data and the determined payment service provider to a security module (215).

15. A payment processing system comprising:
i. a security module (215) configured to receive data identifying a payment service provider and data identifying a payment transaction or payment information;
ii. determine an encrypted payment service provider key associated with the payment service provider;
iii. receive (317) encrypted payment data comprising an account number encrypted according to a first key and preferably receiving (317) further encrypted payment data comprising a PIN number encrypted according to a second key for the PIN number wherein the first key is different from the second key; and
iv. transmit (311) the data identifying the payment transaction or payment information and the encrypted payment data to a further security module (216).
